# EUROPEAN PATENT SPECIFICATION

(11) **EP 3 160 107 B1**
(45) Date of publication and mention of the grant of the patent: **06.11.2019**
(21) Application number: 16190063.4
(22) Date of filing: 22.09.2016
(51) Int. Cl.: H04L 29/06, H04M 1/02, H04M 11/02, H04N 7/18

(54) **INTERCOM SYSTEM, SERVER APPARATUS, AND COMMUNICATION METHOD**
GEGENSPRECHSYSTEM, SERVERVORRICHTUNG UND KOMMUNIKATIONSVERFAHREN
INTERPHONE, APPAREIL DE SERVEUR ET PROCÉDÉ DE COMMUNICATION

(30) Priority: 19.10.2015 JP 2015205455
(43) Date of publication of application: 26.04.2017
(73) Proprietor: Panasonic Intellectual Property Management Co., Ltd., Osaka-shi, Osaka 540-6207 (JP)
(72) Inventor: UE, Chikashi, Osaka, 540-6207 (JP); HAMASAKI, Toshiyuki, Osaka, 540-6207 (JP); KIDO, Noriaki, Osaka, 540-6207 (JP); YOSHIDA, Yuuji, Osaka, 540-6207 (JP)
(74) Representative: Eisenführ Speiser

(56) References cited:
- US-A1- 2012 028 589
- US-A1- 2015 029 335
- US-A1- 2015 035 987

## Description

### BACKGROUND

### 1. Technical Field

The present disclosure relates to an intercom system, a server apparatus, and a communication method.

### 2. Description of the Related Art

US 2015/035987 A1 describes a method and computer program product for operating a doorbell security system. The method may include receiving a doorbell press event signal and sending a doorbell press event notification to at least one mobile computing device. The method may further include opening a video channel connection and an open but disabled audio channel to the mobile computing device. The end user may view a visitor at the door of the doorbell security system before determining whether to enable the audio channel.

US 2015/029335 A1 describe methods which can include using a doorbell to wirelessly communicate with a remotely located computing device. Doorbells can include a speaker, a microphone, a camera, and a button to sound a chime. Some embodiments include using a doorbell to close an electrical circuit that has a sound output device in a way that precludes the sound output device from inappropriately emitting a notification sound.

US 2012/028589 A1 describes a method and system for interactive home monitoring includes detecting a visitor arriving at a premises of a multimedia content distribution network (MCDN) client by an intercom unit installed at the premises. The intercom unit may be coupled to the MCDN client, which may be configured to wirelessly communicate with a user of the MCDN client. A captured image of the visitor may be used to determine if an identity of the visitor is known or unknown. Based on the identity, a communication channel between the visitor and the user may be established at the intercom unit. The intercom unit may further be configured to provide further information to the visitor based on the visitor identity.

Generally, for example, intercom systems in the related art have come into wide use, each of which is constructed from an entrance slave device (which is hereinafter simply referred to as a "slave device") that is installed in an entrance of a house and an indoor master device (which is hereinafter simply referred to as a "master device") inside of the house, which is connected to the slave device.

In recent years, with the advances in information communication technology, a system that results from further improving the intercom system described above has been considered. For example, a system has been considered in which, when calling-up from the slave device takes place, if no person is present in the house, the master device transfers the calling-up from the slave device to a mobile terminal that is registered in advance and a telephone conversation between the slave device and the mobile terminal is transferred.

In Japanese Patent Unexamined Publication No. 2014-200056, it is disclosed a system in which a master device is connected to a public network such as the Internet through an adapter and a router, or a mobile telephone is connected to the public network, and in which in a case where calling-up from the slave device takes place while no person is present in a house, the slave device and the mobile telephone may be able to communicate with each other through the master device, the adapter, the router, and the like. Generally, in the intercom system, if a response is not made within a prescribed time after the calling-up from the slave device takes place, a visitor leaves. However, in the system that is disclosed in Patent Unexamined Publication No. 2014-200056, the master device and the mobile telephone are connected to each other through the public network such as the Internet, it takes a considerable time to establish communication between the master device and the mobile telephone with an Internet protocol and a prescribed time is exceeded after the calling-up from the slave device takes place.

### SUMMARY

An object of the present disclosure is to provide an intercom system, a server apparatus, and a communication method, in which a master device and an outdoor mobile terminal device quickly make connections to each other.

According to an aspect of the present disclosure, there is provided an intercom system that includes an entrance slave device, an intercom master device, a Web server, and a push notification server, which is constituted in such a manner that the entrance slave device, on which a call operation is performed, transmits to the intercom master device a call signal indicating that the call operation is performed, that the intercom master device receives the call signal from the entrance slave device, and transmits to the Web server an incoming call notification that notifies an in-advance associated mobile terminal device that the call signal is received, that the Web server receives the incoming call notification from the intercom master device and determines whether or not a connection to the mobile terminal device is made with a TCP full-time connection, that in a case where the connection is made with the TCP full-time connection, the Web server transmits the incoming call notification to the mobile terminal device using the TCP full-time connection, and that in a case where the connection is not made with the TCP full-time connection, the Web server transmits the incoming call notification to the push notification server and the push notification server receives the incoming call notification from the Web server and transmits the incoming call notification to the mobile terminal device with a push notification.

According to another aspect of the present disclosure, there is provided a server apparatus that is constituted to include: a notification controller that receives from an intercom master device an incoming call notification that notifies that an entrance slave device is called up and determines whether or not a connection to a mobile terminal device that is associated with the intercom master device is made with a TCP full-time connection; and a session manager that transmits the incoming call notification to the mobile terminal device using the TCP full-time connection in a case where the connection to the mobile terminal device is made with the TCP full-time connection; and a push notification information transmission unit that transmits an instruction to transfer the incoming call notification to a push notification server in a case where the connection to the mobile terminal device is made with the full-time TCP connection.

According to still another aspect of the present disclosure, there is provided a communication method in an intercom system that includes an entrance slave device, an intercom master device, a Web server, and a push notification server, in which the entrance slave device, on which a call operation is performed, transmits to the intercom master device a call signal indicating that the call operation is performed, in which the intercom master device receives the call signal from the entrance slave device, and transmits from the intercom master device to the Web server an incoming call notification that notifies an in-advance associated mobile terminal device that the call signal is received, in which the Web server receives the incoming call notification from the intercom master device, in which the Web server determines whether or not a connection to the mobile terminal device is made with a TCP full-time connection, in which in a case where the mobile terminal device has a connection to the Web server with the TCP full-time connection, the Web server transmits the incoming call notification to the mobile terminal device using the TCP full-time connection, and in which in a case where the mobile terminal device does not have the connection to the Web server with the TCP full-time connection, the Web server transmits the incoming call notification to the push notification server, and the push notification server receives the incoming call notification from the Web server and transmits the incoming call notification from the push notification server to the mobile terminal device with a push notification.

According to the present disclosure, a connection can quickly be made between a master device and an outdoor mobile terminal device.

### BRIEF DESCRIPTION OF THE DRAWINGS

FIG. 1 is a schematic diagram illustrating a constitution of an intercom system according to an embodiment;
FIG. 2 is a sequence diagram illustrating a procedure in which a smartphone is called up from a slave device in a case where a Web server and the smartphone are making connections to each other with a Web socket;
FIG. 3 is a sequence diagram illustrating a procedure in which the smartphone is called up from the slave device in a case where the Web server and the smartphone are not making connections to each other with the Web socket;
FIG. 4 is a block diagram illustrating an example of a constitution of a master device;
FIG. 5 is a block diagram illustrating an example of a constitution of the Web server;
FIG. 6 is a block diagram illustrating an example of a constitution of the smartphone;
FIG. 7 is a flowchart illustrating a procedure in which the Web server transfers an incoming call notification; and
FIG. 8 is a flowchart illustrating a procedure in which the smartphone performs processing that receives the incoming call notification.

### DETAILED DESCRIPTION

An embodiment of the present disclosure will be described in detail blow referring to the drawings.

### Embodiment

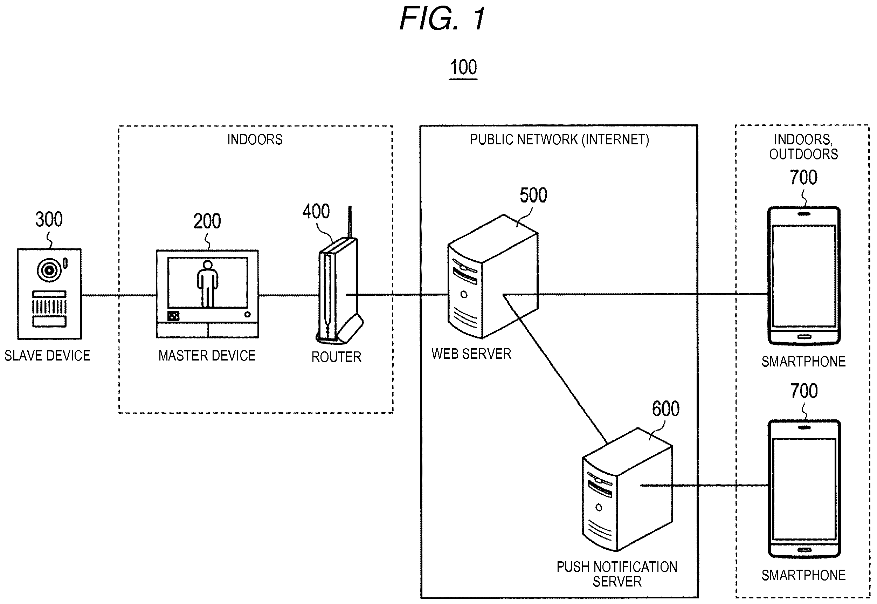

FIG. 1 is a schematic diagram illustrating a constitution of intercom system 100 according to an embodiment. Intercom system 100, as illustrated in Fig. 1, includes intercom master device (which is hereinafter referred to as "master device" for short) 200, entrance slave device (which is hereinafter referred to as "slave device" for short) 300, router 400, Web server 500, push notification server 600, and smartphone 700 as a mobile terminal device.

Master device 200, for example, is provided inside of a house or the like, fixed to a wall, or placed on a table, a stand, or the like. Master device 200 makes a connection to slave device 300 in a wired or wireless manner, transmits and receives audio data and control data to and from slave device 300, and receives image data from slave device 300. Furthermore, master device 200 makes a connection to router 400 in a wired or wireless manner, and makes a connection to Web server 500 on the Internet through router 400. Master device 200 transmits a device token list to push notification server 600 through router 400 and Web server 500. The device token list is a list of smartphone-specific device tokens for all smartphones that are incoming call notification targets. When a call operation is performed on call slave device 300 and master device 200 receives a call signal from slave device 300, master device 200 transmits an incoming call notification to Web server 500 through router 400. According to the present embodiment, master device 200 is assumed to make a connection to slave device 300 in a wired manner, and makes a connection to router 400 in a wireless manner.

Slave device 300, for example, is provided to an entrance door of a house or the like. Slave device 300 makes a connection to master device 200 in a wired manner, and transmits and receives audio data and control data to and from master device 200. According to the present embodiment, slave device 300 may make a connection to master device 200 in a wired or wireless manner. When the call operation is performed on slave device 300, slave device 300 transmits a call signal to master device 200. Furthermore, slave device 300 includes a camera, and when the call operation is performed on slave device 300, slave device 300 transmits image data to master device 200.

Router 400 is interposed between master device 200 and Web server 500 for full-time connection, using a Web socket for performing socket communication between Web browsers of Web server 500 and master device 200.

Web server 500 is a server that is provided on the Internet, manages ID information of master device 200 and ID information of smartphone 700 in a state of being associated with each other, and transmits the incoming call notification that is received from master device 200, to corresponding smartphone 700 or corresponding push notification server 600.

Push notification server 600 is a server (for example, an application server) that is provided on the Internet, and acquires a device token list that is transmitted from master device 200 through router 400 and Web server 500. When receiving the incoming call notification from Web server 500, push notification server 600 transmits a push notification that is destined for smartphone 700 which corresponds to the acquired device token list.

Smartphone 700 includes an application dedicated for performing communications with slave device 300 through Web server 500, router 400, and master device 200. In a case where the application is activated, smartphone 700 makes a full-time connection to Web server 500, using a Web socket. At this time, when smartphone 700 receives an incoming call notification from Web server 500 and a user performs a response operation, smartphone 700 can carry out a telephone conversation with slave device 300.

On the other hand, in a case where a dedicated application is not activated, when the call operation from slave device 300 is performed, smartphone 700 receives the push notification from push notification server 600. When a user of smartphone 700 is alerted to the reception of the push notification and activates an application for communicating with slave device 300, smartphone 700 makes a full-time connection to Web server 500, and smartphone 700 may be able to carry out a telephone conversation with slave device 300.

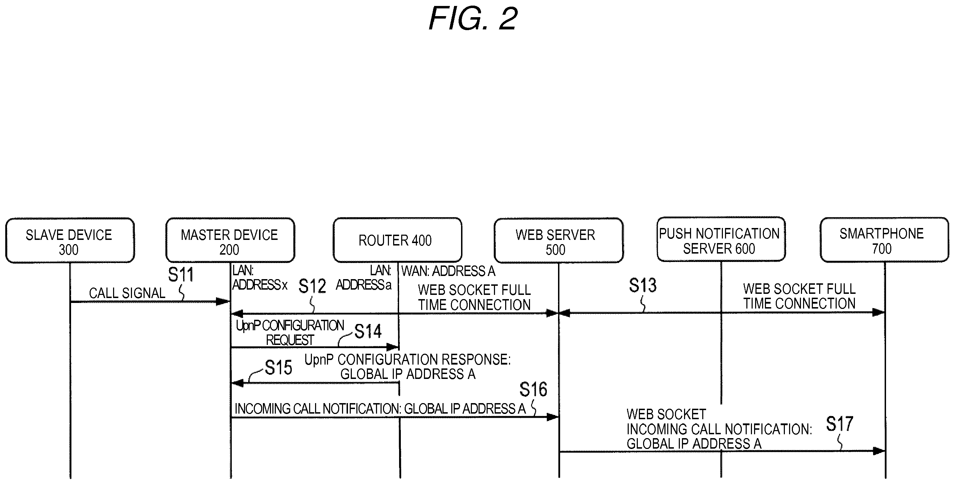

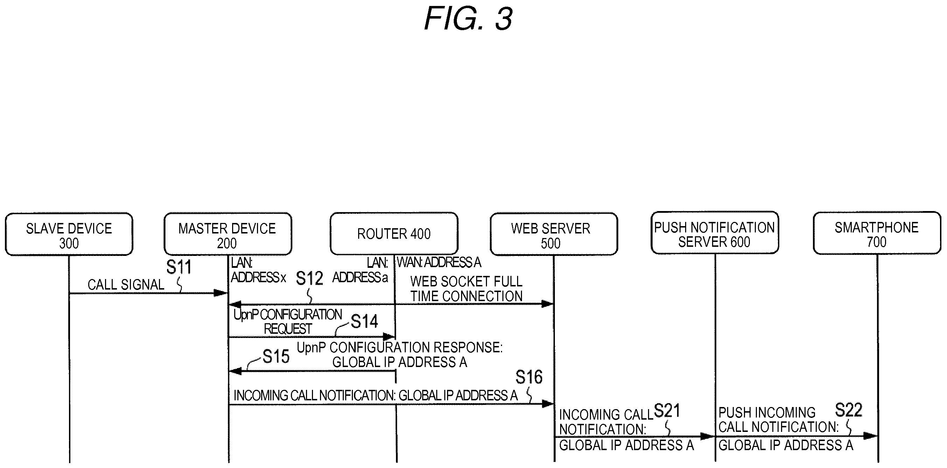

Nest, in intercom system 100 described above, a procedure for calling up smartphone 700 from slave device 300 is described referring to FIGs. 2 and 3. FIG. 2 illustrates a case where Web server 500 and smartphone 700 are making connections to each other with a Web socket. That is, smartphone 700 activates a dedicated application.

In Step S11, a visitor performs a call operation on slave device 300, and slave device 300 transmits a call signal to master device 200.

In Step S12, master device 200 makes a connection to Web server 500 using a Web socket. In Step S13, Web server 500 makes a connection to smartphone 700 using Web socket.

In Step S14, master device 200 transmits a universal plug and play (UpnP) configuration request to router 400. In Step S15, router 400 notifies master device 200 of a global IP address (address A) with a UpnP configuration response.

In Step S16, master device 200 transmits an incoming call notification notifying that the calling-up from slave device 300 takes place, to Web server 500 using a Web socket. Included in the incoming call notification are a local IP address (address x) of master device 200, which is acquired in advance, and the global IP address of router 400, which is acquired in Step S15. In Step S17, Web server 500 determines that a connection using the Web socket is made between the Web browser of Web server 500 and a Web browser of smartphone 700, and transmits an incoming call notification to smartphone 700 with the Web socket.

FIG. 3 illustrates a case that the connection is not made between Web server 500 and smartphone 700 with the Web socket. That is, smartphone 700 does not activate the dedicated application. In FIG. 3, the same constituents as those in FIG. 2 are given the same reference numerals as in FIG. 2 and descriptions thereof are omitted.

In Step S21, Web server 500 determines that the connection is not made between Web server 500 itself and smartphone 700 with the Web socket, and transmits an incoming call notification to push notification server 600.

In Step S22, push notification server 600 transmits a push notification that reports the arrival of the incoming call notification, to smartphone 700.

In this manner, Web server 500 determines whether or not a connection to smartphone 700 that is a destination of the incoming call notification is made with the Web socket. Web server 500 transmits the incoming call notification using such a connection in a case where the connection is made with the Web socket, and transmits the incoming call notification through push notification server 600 in a case where the connection is not made with the Web socket.

In a case where a state where the connection to smartphone 700 that is an incoming call notification target is not considered, Web server 500 performs any one of the notification with the Web socket and the push notification. In a case where the connection is made with the Web socket, the notification with the Web socket and the push notification are performed and the push notification is a useless operation.

### Constitution of the Master Device

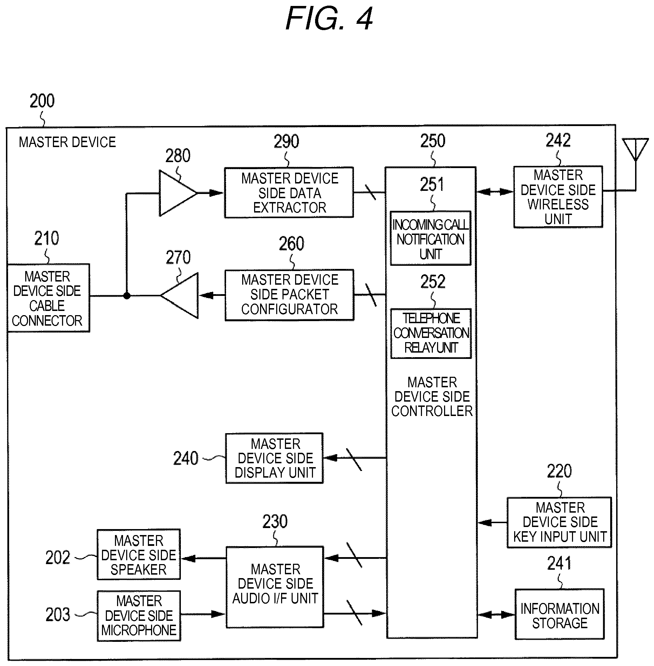

FIG. 4 is a block diagram illustrating an example of a constitution of master device 200.

In FIG. 4, master device 200 has master device side cable connector 210, master device side key input unit 220, master device side speaker 202, master device side microphone 203, master device side audio I/F unit 230, and master device side display unit 240. Furthermore, master device 200 has information storage 241, master device wireless unit 242, master device side controller 250, master device side packet configurator 260, master device side transmission driver 270, master device side reception driver 280, and master device side data extractor 290.

Master device side cable connector 210, for example, includes a two-line cable connection terminal, and a connection is made between one indoor-side end of the two-line cable, and master device side transmission driver 270 and master device side reception driver 280 in a state where a signal is transferable.

Master device side key input unit 220 includes a response button, and when the response button is operated, outputs a signal indicating that the response button is operated, to master device side controller 250.

Master device side speaker 202 converts analog audio data that is output from master device side audio I/F unit 230, into audio, and outputs the resulting audio.

Master device side microphone 203 collects ambient audio, converts the ambient audio into analog audio data, and outputs a result of the conversion to master device side audio I/F unit 230.

Master device side audio I/F unit 230 converts digital audio data that is output from master device side controller 250, into analog audio data, performs adjustment of a signal level of the analog audio data, and outputs the signal level-adjusted analog audio data to master device side speaker 202. Furthermore, master device side audio I/F unit 230 adjusts a signal level of analog audio data that is output from master device side microphone 203, converts the signal level-adjusted analog audio data into digital audio data, and outputs a result of the conversion to master device side controller 250. The analog conversion and the digital conversion are performed by A/D and D/A converters (not illustrated), respectively.

Master device side audio I/F unit 230 may output data that is obtained by performing prescribed audio compression processing on data that results from performing the digital conversion on analog audio data which is output from master device side microphone 203, as digital audio data, to master device side controller 250. Furthermore, in a case where the digital audio data that is output from master device side controller 250 is data that is obtained by performing the prescribed audio compression processing, master device side audio I/F unit 230 may perform prescribed audio decompression processing on the data, and then perform the digital/analog conversion.

Master device side display unit 240 includes a liquid crystal display, reproduces a digital image data that is output from master device side controller 250, and displays an image of the entrance. In a case where the digital image data that is output from master device side controller 250 is data that is obtained by performing prescribed moving-image compression processing, prescribed moving-image decompression processing is performed on the data and image displaying of the resulting data is performed.

Included in information storage 241 are ID information, such as a media access control (MAC) address, and log-in information, such as lock information and a password, which are converted in advance between master device 200 itself and smartphone 700 that is authorized to carry out a telephone conversation with slave device 300. Included in information storage 241 are a global IP address and local ID addresses of all smartphones 700 that are incoming call notification target. Smartphone 700 that is an incoming call notification target is a smartphone that is associated with master device 200, and is a smartphone that is a destination to which master device 200 transmits an incoming call notification.

Master device wireless unit 242 includes a wireless communication circuit and an antenna, and makes a connection to wireless communication router 400 in a manner that makes it possible to communicate with router 400 itself. Master device wireless unit 242 makes a connection to smartphone 700 through router 400 and Web server 500 in a manner that makes it possible to communicate with smartphone 700 itself.

When receiving a call signal from slave device 300, master device side controller 250 outputs prescribed call sound from master device side speaker 202. The output of the call sound, for example, is performed by master device side controller 250 outputting a digital audio signal for the prescribed call sound to master device side audio I/F unit 230.

In addition, master device side controller 250 starts prescribed control processing for realizing an image-accompanied telephone conversation. The control processing is performed by transmitting to slave device 300 the digital audio data that is output from master device side audio I/F unit 230. Furthermore, the control processing is performed by outputting to master device side audio I/F unit 230 and master device side display unit 240 the digital audio data and the digital image data that are received from slave device 300.

However, it is desirable that master device side controller 250 does not perform transmission of the digital audio data to slave device 300 until a signal indicating that the response button is operated is output from master device side key input unit 220.

When receiving the call signal or when transmitting the incoming call notification, master device side controller 250 may perform control in such a manner that master device side speaker 202, master device side microphone 203, master device side audio I/F unit 230, and master device side display unit 240 start to operate.

Furthermore, master device side controller 250 may transmit control data relating to operation of master device 200 or operation of slave device 300 to slave device 300. The control data, for example, includes control signals for controlling camera operations (operations, such as data rate setting, panning, tilting, lighting, and filtering) by slave device 300 from master device 200 or an operation by each of various sensor devices that are included in slave device 300.

In incoming call notification unit 251, when receiving the call signal from slave device 300, master device side controller 250 acquires the local ID address of master device 200 and the global IP address of router 400 from information storage 241, and generates incoming call notification that includes the local ID address of the master device 200 and the global IP address of router 400 that are acquired. The incoming call notification unit 251 performs transmission of the incoming call notification to smartphone 700.

When receiving a response instruction from smartphone 700, telephone conversation relay unit 252 of master device side controller 250 starts telephone conversation relay processing for realizing an image-accompanied telephone conversation between slave device 300 and smartphone 700. The telephone conversation relay processing is performed by transmitting to slave device 300 the digital audio data that is received from smartphone 700 and transmitting to smartphone 700 the digital audio data and the digital image data that are received from slave device 300.

However, it is desirable that telephone conversation relay unit 252 does not perform transmission of the digital audio data being received from smartphone 700 to slave device 300 until the response instruction is received from smartphone 700.

Master device side packet configurator 260 suitably divides and packetizes the digital audio data (and the control data) that is output from master device side controller 250, codes generated packet data, and generates a downlink signal. Master device side packet configurator 260 outputs the generated downlink signal to master device side transmission driver 270.

Master device side transmission driver 270 buffers the downlink signal that is output from master device side packet configurator 260, performs gain adjustment, and transmits a result of the gain adjustment to slave device 300 through master device side cable connector 210.

Master device side reception driver 280 buffers an uplink signal that is sent from slave device 300 through master device side cable connector 210, by performing the gain adjustment, and outputs a result of the buffering to master device side data extractor 290.

Master device side data extractor 290 extracts the digital audio data and the digital image data of slave device 300, which are included in the uplink signal, from the uplink signal that is output from master device side reception driver 280, and outputs to master device side controller 250 the digital audio data and the digital image data that are extracted.

Transmission and reception of various pieces of information between master device 200 itself and slave device 300 by master device side controller 250 described above are performed through master device side packet configurator 260, master device side transmission driver 270, master device side cable connector 210, master device side reception driver 280, and master device side data extractor 290.

However, master device side controller 250 in advance retains transmission control information that is information which specifies a transmission timing and a reception timing for each of slave device 300 and master device side controller 250 in time division duplex between slave device 300 and master device 200. Based on the transmission control information, master device side controller 250 controls operation of master device side transmission driver 270 in such a manner that transmission of the downlink signal and reception of the uplink signal are performed in a time-division manner.

Furthermore, transmission and reception of various pieces of information between master device 200 itself and smartphone 700 by master device side controller 250 described above are performed through master device wireless unit 242.

Furthermore, delivery of data between the units described above by master device 200 is performed with digital transfer, except between master device side speaker 202 and master device side microphone 203, and master device side audio I/F unit 230.

With this configuration, when receiving the call signal from slave device 300, master device 200 transmits the incoming call notification to smartphone 700.

### Constitution of the Web Server

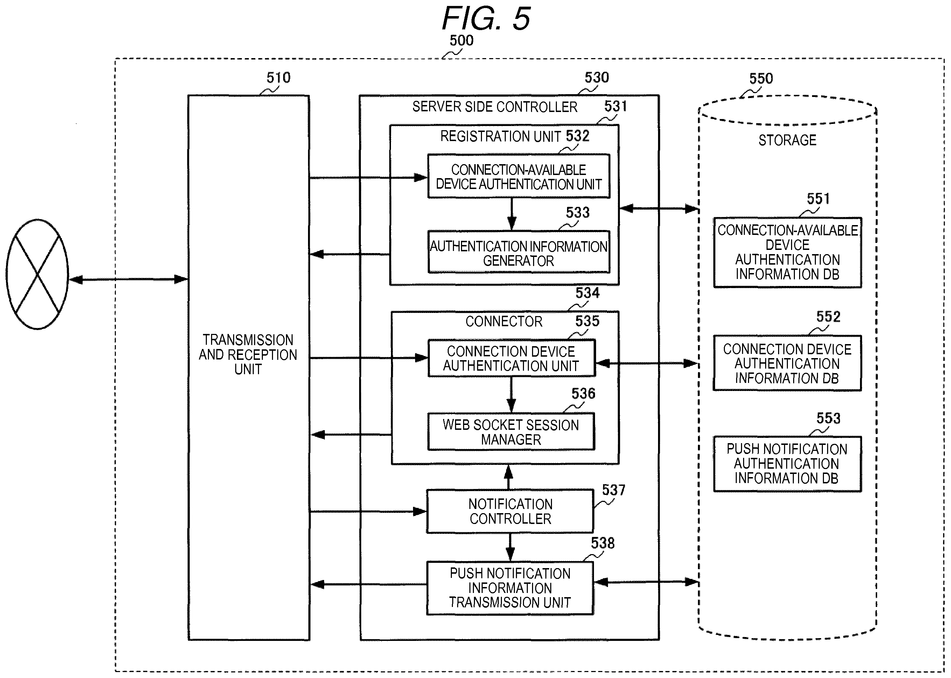

FIG. 5 is a block diagram illustrating an example of a constitution of Web server 500.

In FIG. 5, Web server 500 has transmission and reception unit 510, server side controller 530, and storage 550.

Transmission and reception unit 510 makes a connection to a router, a wireless base station (not illustrated), and push notification server 600 through a public network in a manner that makes it possible to communicate the router, the wireless base station, and push notification server 600.

Server side controller 530 has registration unit 531, connector 534, notification controller 537, and push notification information transmission unit 538, and controls entire Web server 500. When receiving the response instruction from smartphone 700, server side controller 530 starts the telephone conversation relay processing for realizing the image-accompanied telephone conversation between master device 200 and smartphone 700. The telephone conversation relay processing is performed by transmitting to master device 200 the digital audio data that is received from smartphone 700 and transmitting to smartphone 700 the digital audio data and the digital image data that are received from master device 200.

Registration unit 531 performs device authentication on a registration request from master device 200 or smartphone 700, and registers the ID information of master device 200 or smartphone 700 or the like that makes a registration request, in a connection-available device authentication information database (DB) 551 of storage 550.

On the registration request, connection-available device authentication unit 532 performs authentication to know whether master device 200 or smartphone 700 that makes the registration request is an authorized or qualified legitimate device that is registered with Web server 500. The connection-available device authentication unit 532 outputs a result of the authentication to authentication information generator 533.

When receiving the legitimate result of the authentication from connection-available device authentication unit 532, authentication information generator 533 generates authentication information (connection device authentication information) for a Web socket session that makes a connection to master device 200 or smartphone 700 that makes the registration request, and authentication information (push notification authentication information) for requesting notification to push notification server 600. Authentication information generator 533 transmits the generated connection device authentication information to master device 200 or smartphone 700 that makes the registration request from transmission and reception unit 510, and transmits the generated push notification authentication information to push notification server 600 from transmission and reception unit 510. Furthermore, authentication information generator 533 registers the generated push notification authentication information in connection device authentication information database (DB) 552 of storage 550, and registers the generated push notification authentication information in push notification authentication information database (DB) 553 of storage 550.

On a connection request with the Web socket from master device 200 or smartphone 700, connector 534 performs authentication to know whether master device 200 or smartphone 700 that makes the connection request is an authorized or qualified legitimate device that makes the connection with the Web socket. When notification controller 537 that will be described below notifies that Web socket notification is performed, connector 534 performs notification transfer with the Web socket to smartphone 700 that is an incoming call notification target, on the incoming call notification from master device 200, using the authentication information that is stored in connection device authentication information database 552.

On the connection request with the Web socket from master device 200 or smartphone 700, connection device authentication unit 535 performs the authentication, with the authentication information that is registered with connection device authentication information database 552 of storage 550, and outputs a result of the authentication to Web socket session manager 536.

Web socket session manager 536 manages a connection state with the Web socket from master device 200 or smartphone 700. Furthermore, Web socket session manager 536 performs association management with the ID information of master device 200 or smartphone 700 in the same Web socket session.

Notification controller 537 performs individual or broadcast notification to smartphone 700 that is associated with master device 200, on the incoming call notification from master device 200. Furthermore, based on a Web socket connection situation of smartphone 700 that is an incoming call notification target, notification controller 537 determines which one of the Web socket notification and the push notification is used as notification means. That is, in a case where the Web socket connection situation of smartphone 700 that is an incoming call notification target is that smartphone 700 is connected, notification controller 537 determines that the Web socket notification is used as notification means. Furthermore, in a case where the Web socket connection situation of smartphone 700 that is an incoming call notification target is that smartphone 700 is not connected, notification controller 537 determines that the push notification is used as notification means. In a case where it is determined that the Web socket notification is used, notification controller 537 notifies Web socket session manager 536 to that effect, and in a case where it is determined that the push notification is used, notifies the push notification information transmission unit 538 to that effect.

When notified by notification controller 537 that the push notification is performed, push notification information transmission unit 538 performs notification transfer to push notification server 600, on the incoming call notification from master device 200, using the authentication information that is stored in push notification authentication information database 553.

Storage 550 has connection-available device authentication information database 551, connection device authentication information database 552, and push notification authentication information database 553. The corresponding authentication information is registered by registration unit 531 in these databases, and the authentication information is read by connector 534 and push notification information transmission unit 538.

### Constitution of the Smartphone

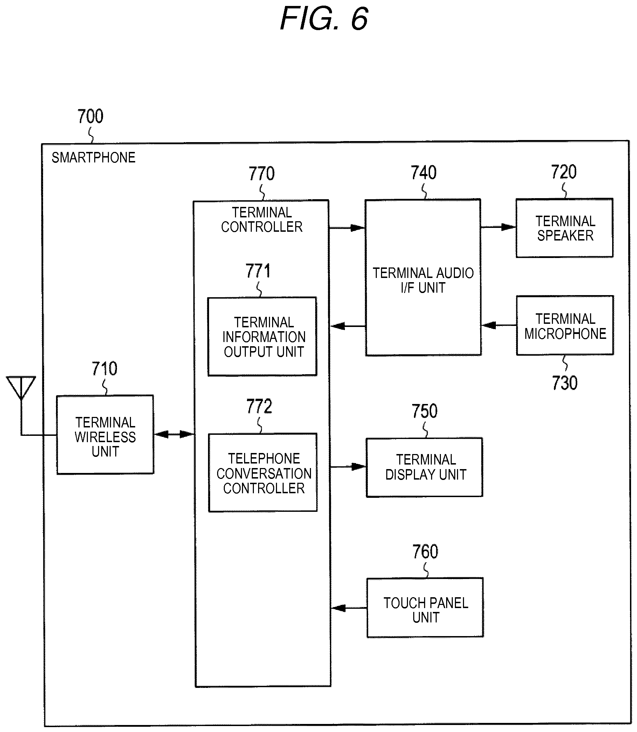

FIG. 6 is a block diagram illustrating an example of a constitution of a smartphone.

In FIG. 6, smartphone 700 has terminal wireless unit 710, terminal speaker 720, terminal microphone 730, terminal audio I/F unit 740, terminal display unit 750, touch panel unit 760, and terminal controller 770.

Terminal wireless unit 710 includes a wireless communication circuit and an antenna, and makes a connection to a wireless base station (not illustrated) that is connected to a public network through a wireless communication line in a manner that makes it possible to communicate with the wireless base station itself. Terminal wireless unit 710 makes a connection to Web server 500 through the wireless base station and the public network in a manner that makes it possible to communicate with Web server 500 itself. Furthermore, terminal wireless unit 710 makes a connection to master device 200 through Web server 500 and router 400 in a manner that makes it possible to communicate with master device 200 itself.

Terminal speaker 720 converts analog audio data that is output from terminal audio I/F unit 740 into audio, and outputs a result of the conversion.

Terminal microphone 730 collects ambient audio, converts the ambient audio into analog audio data, and outputs a result of the conversion to terminal audio I/F unit 740.

Terminal audio I/F unit 740 converts digital audio data that is output from terminal controller 770, into analog audio data, performs adjustment of a signal level of the analog audio data, and outputs the signal level-adjusted analog audio data to terminal speaker 720. Furthermore, terminal audio I/F unit 740 adjusts a signal level of analog audio data that is output from terminal microphone 730, into digital audio data, converts the signal level-adjusted analog audio data, and outputs a result of the conversion to terminal controller 770. The analog conversion and the digital conversion are performed by A/D and D/A converters (not illustrated), respectively.

Terminal audio I/F unit 740 may output data that is obtained by performing prescribed audio compression processing on data that results from performing the digital conversion on analog audio data which is output from terminal microphone 730, as digital audio data, to terminal controller 770. Furthermore, in a case where the digital audio data that is output from terminal controller 770 is data that is obtained by performing the prescribed audio compression processing, terminal audio I/F unit 740 may perform prescribed audio decompression processing on the data, and then perform the digital/analog conversion.

Terminal display unit 750 includes a liquid crystal display portion of a touch panel-attached liquid crystal display, reproduces digital image data that is output from terminal controller 770, and performs the image displaying. In a case where the digital image data that is output from terminal controller 770 is data that is obtained by performing prescribed moving-image compression processing, prescribed moving-image decompression processing is performed on the data and image displaying of the resulting data is performed. Furthermore, under the control of terminal controller 770, terminal display unit 750 displays a terminal response button and a checking button.

Various operations for smartphone 700 are performed on touch panel unit 760. For example, when the terminal response button or the checking button is displayed on terminal display unit 750, a touch operation for this is performed on touch panel unit 760. When the operation is performed, touch panel unit 760 notifies terminal controller 770 to that effect.

When receiving the incoming call notification with the Web socket from Web server 500, terminal information output unit 771 of terminal controller 770 outputs call sound indicating that a visitor has come to an entrance, from terminal speaker 720, or outputs display information indicating that a visitor has come to an entrance to terminal display unit 750. Furthermore, when receiving the push notification from push notification server 600, terminal information output unit 771 outputs notification sound indicating that the push notification is received, from terminal speaker 720, or outputs pop-up display information indicating that the visitor has come to the entrance, to terminal display unit 750. Audio output, for example, is performed by terminal information output unit 771 outputting a digital audio signal for the call sound to terminal audio I/F unit 740.

Accordingly, terminal information output unit 771 notifies the user of smartphone 700 that the visitor is at the entrance. In addition, terminal information output unit 771 displays the terminal response button described above on terminal display unit 750.

Furthermore, when the incoming call notification is received and the user performs a response operation in smartphone 700, terminal controller 770 of telephone call controller 772 transmits a response instruction to master device 200 and starts a telephone conversation between smartphone 700 and slave device 300 through master device 200. The response operation is, for example, a touch operation that is performed on the terminal response button that is displayed on terminal display unit 750.

Theses functional units of terminal controller 770, for example, are realized by dedicated application software that is installed in advance on smartphone 700. Furthermore, transmission and reception of various pieces of information between Web server 500 and master device 200 by terminal controller 770 described above are performed through terminal wireless unit 710.

With this configuration, when the incoming call notification is received from master device 200, smartphone 700 can output information indicating that the visitor has come to the entrance.

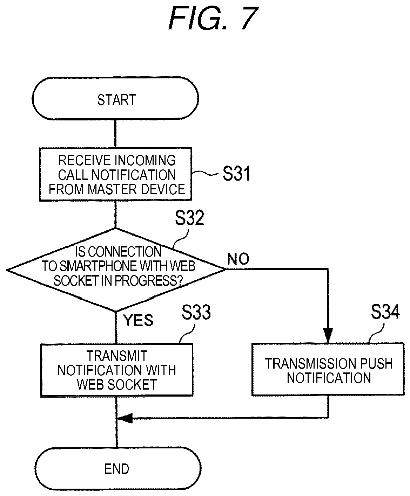

FIG. 7 is a flowchart illustrating a procedure in which Web server 500 transfers an incoming call notification. In Step S31, notification controller 537 receives an incoming call notification from master device 200. In Step S32, notification controller 537 determines whether or not a connection between Web server 500 itself and smartphone 700 that is a transmission destination of an incoming call notification is being made with the Web socket. In a case where the connection with the Web socket is in progress (YES), proceeding to Step S33 takes place. In a case where the connection with the Web socket is not in progress (NO), proceeding to Step S34 takes place.

In Step S33, for the incoming call notification from master device 200, connector 534 transmits a notification with the Web socket to smartphone 700 that is an incoming call notification target.

In Step S34, for the incoming call notification from master device 200, push notification information transmission unit 538 transmits a push notification to smartphone 700 that is an incoming call notification target, to push notification server 600.

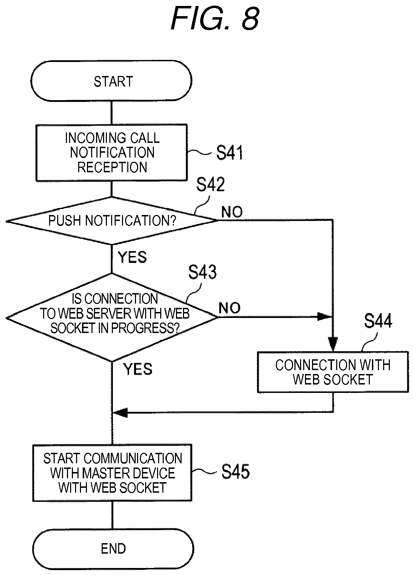

FIG. 8 is a flowchart illustrating a procedure in which smartphone 700 performs processing that receives the incoming call notification. In Step S41, the terminal controller receives the incoming call notification from master device 200. In Step S42, the terminal controller determines whether or not the incoming call notification is performed with the push notification. In a case where the incoming call notification is performed with the push notification (YES), proceeding to Step S43 takes place. In a case where the incoming call notification is not performed with the push notification (NO), proceeding to Step S45 takes place.

In Step S43, the terminal controller determines whether or not smartphone 700 is making a connection to Web server 500 with the Web socket. In a case where the connection is being made with the Web socket (YES), proceeding to Step S45 takes place. In a case where the connection is not being made with the Web socket (NO), proceeding to Step S44 takes place.

In Step S44, the terminal controller makes a connection to Web server 500 with the Web socket. In Step S45, the terminal controller starts communication with master device 200 with the Web socket.

In this manner, in the intercom system according to the present embodiment, it is determined whether or not Web server 500 that receives the incoming call notification from master device 200 has a connection to smartphone 700 with the Web socket. In a case where the connection is made with the Web socket, Web server 500 transmits the incoming call notification to smartphone 700. In a case where the connection is not made with the Web socket, Web server 500 transmits the push notification to smartphone 700, to push notification server 600. Accordingly, even in a case where smartphone 700 does not have a full-time connection to Web server 500 with the Web socket, the user of smartphone 700 can know the presence of the visitor with the push notification, and can quickly make a connection between master device 200 and smartphone 700 on the move. As a result, a response can be made using smartphone 700 before the visitor leaves.

According to the present embodiment, the smartphone as one example of the mobile terminal device is described, but the present disclosure is not limited to this. For example, examples of the mobile terminal devices may include a tablet type terminal, a notebook personal computer, a wearable terminal, and the like, and may include any terminal that is equipped at least with a telephone conversation function and a push notification reception function.

Furthermore, according to the present embodiment, the full-time connection with the Web socket as one example is described but the present disclosure is not limited to this. Full-time connection with transmission control protocol (TCP) may be possible.

Furthermore, according to the present embodiment, the device that may be able to communicate with the master device as the entrance slave device is described, but the present disclosure is not limited to this. For example, a security camera device or a recording device as the device that may be able to communicate with the master device may be applied. In a case where the security camera device or the recording device is applied, when a certain event occurs in the devices, the connection is quickly made between the master device or the outdoor mobile terminal device.

## Claims

1. An intercom system (100) that includes a slave device (300), an intercom master device (200), a Web server (500), and a push notification server (600),
wherein the slave device (300), on which a call operation is performed, is configured to transmit to the intercom master device (200) a call signal indicating that the call operation is performed,
wherein the intercom master device (200) is configured to receive the call signal from the slave device (300), and is configured to transmit to the Web server (500) an incoming call notification that notifies an in-advance associated mobile terminal device (700) that the call signal is received,
wherein the Web server (500) is configured to receive the incoming call notification from the intercom master device (200) and is configured to determine whether or not a connection to the mobile terminal device (700) is made with a TCP full-time connection,
wherein in a case where the connection is made with the TCP full-time connection, the Web server (500) is configured to transmit the incoming call notification to the mobile terminal device (700) using the TCP full-time connection,
wherein in a case where the connection is not made with the TCP full-time connection, the Web server (500) is configured to transmit the incoming call notification to the push notification server (600), and
wherein the push notification server (600) is configured to receive the incoming call notification from the Web server (500) and is configured to transmit the incoming call notification to the mobile terminal device (700) with a push notification.

2. A server apparatus that is used in an intercom system (100), the apparatus comprising:
a notification controller (537) that is configured to receive from an intercom master device (200) an incoming call notification that notifies that a slave device (300) is called up and is configured to determine whether or not a connection to a mobile terminal device (700) that is associated with the intercom master device (200) is made with a TCP full-time connection;
a session manager (536) that is configured to transmit the incoming call notification to the mobile terminal device (700) using the TCP full-time connection in a case where the connection to the mobile terminal device (700) is made with the TCP full-time connection; and
a push notification information transmission unit (538) that is configured to transmit an instruction to transfer the incoming call notification to a push notification server (600) in a case where the connection to the mobile terminal device (700) is made with the TCP full-time connection.

3. A communication method in an intercom system (100) that includes a slave device (300), an intercom master device (200), a Web server (500), and a push notification server (600),
wherein the slave device (300), on which a call operation is performed, transmits (S11) to the intercom master device (200) a call signal indicating that the call operation is performed,
wherein the intercom master device (200) receives the call signal from the slave device (300), and transmits (S16) an incoming call notification that notifies an in-advance associated mobile terminal device (700) that the call signal is received, from the intercom master device (200) to the Web server (500),
wherein the Web server (500) receives the incoming call notification from the intercom master device (200),
wherein the Web server (500) determines whether or not a connection to the mobile terminal device (700) is made with a TCP full-time connection,
wherein in a case where the mobile terminal device (700) has a connection to the Web server (500) with the TCP full-time connection, the Web server (500) transmits (S17) the incoming call notification to the mobile terminal device (700) using the TCP full-time connection, and
wherein in a case where the mobile terminal device (700) does not have the connection to the Web server (500) with the TCP full-time connection, the Web server (500) transmits (S21) the incoming call notification to the push notification server (600), and the push notification server (600) receives the incoming call notification from the Web server (500) and transmits (S22) the incoming call notification from the push notification server (600) to the mobile terminal device (700) with a push notification.

## Patentansprüche

1. Gegensprechsystem (100) mit einer Slave-Vorrichtung (300), einer Gegensprech-Master-Vorrichtung (200), einem Web-Server (500) und einem Push-Benachrichtigungsserver (600),
wobei die Slave-Vorrichtung (300), an der eine Anrufbedienung durchgeführt wird, ausgestaltet ist, ein Anrufsignal an die Gegensprech-Master-Vorrichtung (200) zu übermitteln, das angibt, dass die Anrufbedienung durchgeführt wird,
wobei die Gegensprech-Master-Vorrichtung (200) ausgestaltet ist, das Anrufsignal von der Slave-Vorrichtung (300) zu empfangen, und ausgestaltet ist, eine Anrufeingangsbenachrichtigung an den Web-Server (500) zu übermitteln, die ein vorabassoziiertes mobiles Endgerät (700) benachrichtigt, dass das Anrufsignal empfangen wird,
wobei der Web-Server (500) ausgestaltet ist, die Anrufeingangsbenachrichtigung von der Gegensprech-Master-Vorrichtung (200) zu empfangen, und ausgestaltet ist, zu bestimmen, ob eine Verbindung mit dem mobilen Endgerät (700) mit einer TCP-Full-Time-Verbindung hergestellt ist,
wobei in einem Fall, bei dem die Verbindung mit der TCP-Full-Time-Verbindung hergestellt ist, der Web-Server (500) ausgestaltet ist, die Anrufeingangsbenachrichtigung unter Verwendung TCP-Full-Time-Verbindung an das mobile Endgerät (700) zu übermitteln,
wobei in einem Fall, bei dem die Verbindung nicht mit der TCP-Full-Time-Verbindung hergestellt ist, der Web-Server (500) ausgestaltet ist, die Anrufeingangsbenachrichtigung an den Push-Benachrichtigungsserver (600) zu übermitteln, und
wobei der Push-Benachrichtigungsserver (600) ausgestaltet ist, die Anrufeingangsbenachrichtigung von dem Web-Server (500) zu empfangen, und ausgestaltet ist, die Anrufeingangsbenachrichtigung mit einer Push-Benachrichtigung an das mobile Endgerät (700) zu übermitteln.

2. Server-Vorrichtung, die in einem Gegensprechsystem (100) verwendet wird, wobei die Vorrichtung umfasst:
eine Benachrichtigungssteuereinheit (537), die ausgestaltet ist, von einer Gegensprech-Master-Vorrichtung (200) eine Anrufeingangsbenachrichtigung zu empfangen, die angibt, dass eine Slave-Vorrichtung (300) angerufen wird, und die ausgestaltet ist, zu bestimmen, ob eine Verbindung mit einem mobilen Endgerät (700), das mit der Gegensprech-Master-Vorrichtung (200) assoziiert ist, mit einer TCT-Full-Time-Verbindung hergestellt ist,
einem Session-Verwalter (536), der in einem Fall, bei dem die Verbindung mit dem mobilen Endgerät (700) mit der TCP-Full-Time-Verbindung hergestellt ist, ausgestaltet ist, die Anrufeingangsbenachrichtigung unter Verwendung der TCP-Full-Time-Verbindung an das mobile Endgerät (700) zu übermitteln, und
einer Push-Benachrichtigungsinformationsübermittlungseinheit (538), die in einem Fall, bei dem die Verbindung mit dem mobilen Endgerät (700) mit der TCP-Full-Time-Verbindung hergestellt ist, ausgestaltet ist, eine Instruktion zum Übertragen der Anrufeingangsbenachrichtigung an einen Push-Benachrichtigungsserver (600) zu übermitteln.

3. Kommunikationsverfahren in einem Gegensprechsystem (100) mit einer Slave-Vorrichtung (300), einer Gegensprech-Master-Vorrichtung (200), einem Web-Server (500) und einem Push-Benachrichtigungsserver (600),
wobei die Slave-Vorrichtung (300), an der eine Anrufbedienung durchgeführt wird, ein Anrufsignal an die Gegensprech-Master-Vorrichtung (200) übermittelt (S11), das angibt, dass eine Anrufbedienung durchgeführt wird,
wobei die Gegensprech-Master-Vorrichtung (200) das Anrufsignal von der Slave-Vorrichtung (300) empfängt und eine Anrufeingangsbenachrichtigung von der Gegensprech-Master-Vorrichtung (200) an den Web-Server (500) übermittelt (S16), die ein vorabassoziiertes mobiles Endgerät (700) benachrichtigt, dass das Anrufsignal empfangen wird,
wobei der Web-Server (500) die Anrufeingangsbenachrichtigung von der Gegensprech-Master-Vorrichtung (200) empfängt,
wobei der Web-Server (500) bestimmt, ob eine Verbindung mit dem mobilen Endgerät (700) mit einer TCP-Full-Time-Verbindung hergestellt ist,
wobei in einem Fall, bei dem das mobile Endgerät (700) mit der TCP-Full-Time-Verbindung eine Verbindung zu dem Web-Server hat, der Web-Server (500) die Anrufeingangsbenachrichtigung unter Verwendung der TCP-Full-Time-Verbindung an das mobile Endgerät (700) übermittelt (S17), und
wobei in einem Fall, bei dem das mobile Endgerät (700) nicht mit der TCP-Full-Time-Verbindung eine Verbindung zu dem Web-Server (500) hat, der Web-Server (500) die Anrufeingangsbenachrichtigung an den Push-Benachrichtigungsserver (600) übermittelt (S21), und der Push-Benachrichtigungsserver (600) die Anrufeingangsbenachrichtigung von dem Web-Server (500) empfängt und die Anrufeingangsbenachrichtigung von dem Push-Benachrichtigungsserver (600) mit einer Push-Benachrichtigung an das mobile Endgerät (700) übermittelt (S22).

## Revendications

1. Système d'interphone (100) qui comprend un dispositif esclave (300), un dispositif maître d'interphone (200), un serveur Web (500) et un serveur de notification push (600),
dans lequel le dispositif esclave (300) sur lequel une opération d'appel est effectuée est configuré pour transmettre au dispositif maître d'interphone (200) un signal d'appel indiquant que l'opération d'appel est effectuée,
dans lequel le dispositif maître d'interphone (200) est configuré pour recevoir le signal d'appel du dispositif esclave (300), et est configuré pour transmettre au serveur Web (500) une notification d'appel entrant qui informe un dispositif de terminal mobile associé en avance (700) que le signal d'appel est reçu,
dans lequel le serveur Web (500) est configuré pour recevoir la notification d'appel entrant en provenance du dispositif maître d'interphone (200) et est configuré pour déterminer si une connexion au dispositif de terminal mobile (700) est établie avec une connexion TCP à plein temps,
dans lequel, dans un cas où la connexion est établie avec la connexion TCP à plein temps, le serveur Web (500) est configuré pour transmettre la notification d'appel entrant au dispositif de terminal mobile (700) en utilisant la connexion TCP à plein temps,
dans lequel, dans un cas où la connexion n'est pas établie avec la connexion TCP à plein temps, le serveur Web (500) est configuré pour transmettre la notification d'appel entrant au serveur de notification push (600), et
dans lequel le serveur de notification push (600) est configuré pour recevoir la notification d'appel entrant en provenance du serveur Web (500) et est configuré pour transmettre la notification d'appel entrant au dispositif de terminal mobile (700) avec une notification push.

2. Dispositif serveur qui est utilisé dans un système d'interphone (100), le dispositif comprenant:
une unité de commande de notification (537) qui est configurée pour recevoir, en provenance d'un dispositif maître d'interphone (200), une notification d'appel entrant qui informe qu'un dispositif esclave (300) est appelé, et qui est configuré pour déterminer si une connexion à un dispositif de terminal mobile (700) qui est associé au dispositif maître d'interphone (200) est établie avec une connexion TCP à plein temps,
un gestionnaire de session (536) qui est configuré pour transmettre la notification d'appel entrant au dispositif de terminal mobile (700) en utilisant la connexion TCP à plein temps dans un cas où la connexion au dispositif de terminal mobile (700) est établie avec la connexion TCP à plein temps, et
une unité de transmission d'information de notification push (538) qui est configurée pour transmettre une instruction de transfert de la notification d'appel entrant à un serveur de notification push (600) dans un cas où la connexion au dispositif de terminal mobile (700) est établie avec la connexion TCP à plein temps.

3. Procédé de communication dans un système d'interphone (100) qui comprend un dispositif esclave (300), un dispositif maître d'interphone (200), un serveur Web (500) et un serveur de notification push (600),
dans lequel le dispositif esclave (300) sur lequel une opération d'appel est effectuée transmet (S11) au dispositif maître d'interphone (200) un signal d'appel indiquant que l'opération d'appel est effectuée,
dans lequel le dispositif maître d'interphone (200) reçoit le signal d'appel du dispositif esclave (300), et transmet, du dispositif maître d'interphone (200) au serveur Web (500), une notification d'appel entrant qui informe un dispositif de terminal mobile associé en avance (700) que le signal d'appel est reçu,
dans lequel le serveur Web (500) reçoit la notification d'appel entrant en provenance du dispositif maître d'interphone (200),
dans lequel le serveur Web (500) détermine si une connexion au dispositif de terminal mobile (700) est établie avec une connexion TCP à plein temps,
dans lequel, dans un cas où le dispositif de terminal mobile (700) est connecté au serveur Web (500) avec la connexion TCP à plein temps, le serveur Web (500) transmet (S17) la notification d'appel entrant au dispositif de terminal mobile (700) en utilisant la connexion TCP à plein temps, et
dans lequel, dans un cas où le dispositif de terminal mobile (700) n'est pas connecté au serveur Web (500) avec la connexion TCP à plein temps, le serveur Web (500) transmet (S21) la notification d'appel entrant au serveur de notification push (600), et le serveur de notification push (600) reçoit la notification d'appel entrant du serveur Web (500) et transmet (S22) la notification d'appel entrant du serveur de notification push (600) au dispositif de terminal mobile (700) avec une notification push.
